# FASCICULE DE BREVET EUROPEEN

(11) **EP 3 467 434 B1**
(45) Date de publication et mention de la délivrance du brevet: **20.11.2019**
(21) Numéro de dépôt: 18197648.1
(22) Date de dépôt: 28.09.2018
(51) Int. Cl.: G01C 5/06, G05D 1/00, G01C 23/00, G01C 5/00

(54) **PROCÉDÉ ET DISPOSITIF DE DÉTERMINATION D'UNE ALTITUDE DE SECOURS D'UN AÉRONEF**
VERFAHREN UND VORRICHTUNG ZUR BESTIMMUNG EINER NOTHÖHE EINES LUFTFAHRZEUGS
METHOD AND DEVICE FOR DETERMINING AN EMERGENCY ALTITUDE OF AN AIRCRAFT

(30) Priorité: 05.10.2017 FR 1759343
(43) Date de publication de la demande: 10.04.2019
(73) Titulaire: Airbus Operations S.A.S., 31060 Toulouse (FR)
(72) Inventeur: DELPORTE, Martin, 31470 FONSORBES (FR); ALCALAY, Guillaume, 31000 TOULOUSE (FR)
(74) Mandataire: Sarraméa, Claude

(56) Documents cités:
- WO-A1-99/42788
- JP-A- 2016 217 759
- US-A1- 2007 043 482
- US-A1- 2007 290 919
- US-A1- 2013 190 951
- US-B1- 6 456 940
- US-B1- 6 804 614

## Description

### DOMAINE TECHNIQUE

La présente invention concerne un procédé et un dispositif de détermination d'une altitude de secours d'un aéronef.

### ÉTAT DE LA TECHNIQUE

Les paramètres de secours (« backup parameters » en anglais), tels que l'altitude de secours (« backup altitude » en anglais), d'un aéronef peuvent être dérivés de valeurs de pression statique corrigées provenant de capteurs de pression situés dans les nacelles des moteurs d'un aéronef. Il apparaît que les paramètres de secours dérivés de cette manière sont cohérents avec l'altitude déterminée par un système de mesure classique de l'altitude pression, sauf pendant les transitions moteurs (« engine transients » en anglais).

Afin d'améliorer au moins l'altitude de secours, les valeurs de pression statique sont combinées à des données provenant de système de géolocalisation. Cette combinaison améliore les valeurs d'altitudes de secours pendant les transitions moteurs. Toutefois, la poussée du moteur au niveau duquel se situent les capteurs de pression de l'aéronef a des effets significatifs sur la pression statique, ce qui fait dériver l'altitude de secours.

Le document WO 99/42788 A1 divulgue la détermination de l'altitude d'un aéronef à partir de la combinaison de mesures de pression statique et de données provenant d'un système de géolocalisation.

Les documents US 2007/043482 A1 et US 6 456 940 B1 divulguent la détermination de l'altitude de secours d'un aéronef à partir d'une altitude barométrique et d'une altitude GPS.

### EXPOSÉ DE L'INVENTION

La présente invention a pour objet de pallier ces inconvénients en proposant un procédé et un dispositif embarqué permettant de déterminer une altitude de secours d'un aéronef, notamment un avion de transport.

À cet effet, l'invention concerne un procédé de détermination d'une altitude de secours d'un aéronef.

Selon l'invention, le procédé de détermination comprend les étapes suivantes qui sont mises en œuvre de façon répétitive et automatique :
- une première étape de calcul, mise en œuvre par un premier module de calcul, consistant à calculer une première pression statique à partir d'une altitude déterminée par un module de géolocalisation ;
- une étape de réception, mise en œuvre par un module de réception, consistant à recevoir une deuxième pression statique déterminée par un capteur de pression statique ;
- une deuxième étape de calcul, mise en œuvre par un deuxième module de calcul, consistant à calculer une différence de pression statique entre la deuxième pression statique et la première pression statique ;
- une étape de filtrage, mise en œuvre par un module de filtrage, consistant à filtrer la différence de pression statique ;
- une troisième étape de calcul, mise en œuvre par un troisième module de calcul, consistant à calculer l'altitude de secours à partir de la différence de pression statique filtrée dans l'étape de filtrage et de la première pression statique calculée dans la première étape de calcul ;
- une étape d'envoi, mise en œuvre par un module d'envoi, consistant à fournir l'altitude de secours calculée à un dispositif utilisateur.

Ainsi, grâce au calcul de l'altitude de secours par les pressions statiques, l'altitude de secours s'affranchit des sources anémobarométriques ou ADR (« Air Data Références » en anglais). Les variations de l'altitude de secours pendant les transitions moteurs sont alors réduites.

Selon une particularité, la première étape de calcul comprend les sous-étapes suivantes :
- une première sous-étape de réception, mise en œuvre par un premier sous-module de réception, consistant à recevoir l'altitude déterminée par le module de géolocalisation ;
- une première sous-étape de calcul, mise en œuvre par un premier sous-module de calcul, consistant à calculer la première pression statique à partir de l'altitude reçue dans la sous-étape de réception et d'un modèle atmosphérique standard qui définit une pression statique en fonction d'une altitude.

Avantageusement, l'étape de filtrage comprend les sous-étapes suivantes :
- une deuxième sous-étape de réception, mise en oeuvre par un deuxième sous-module de réception, consistant à recevoir une vitesse verticale de l'aéronef déterminée par le module de géolocalisation ;
- une deuxième sous-étape de calcul, mise en oeuvre par un deuxième sous-module de calcul, consistant à calculer une constante de temps variable à partir de la valeur absolue de la vitesse verticale de l'aéronef et d'un tableau d'interpolation qui définit une constante de temps en fonction d'une vitesse verticale de l'aéronef ;
- une sous-étape de filtrage, mise en oeuvre par un sous-module de filtrage, consistant à filtrer la différence de pression statique selon la constante de temps variable.

Ainsi, l'étape de filtrage permet de tenir compte du fait que les couches de l'atmosphère sont décalées par rapport aux couches déterminées par le modèle atmosphérique standard.

En outre, l'étape de filtrage comprend en outre une sous-étape d'initialisation, mise en œuvre par un sous-module d'initialisation, consistant à effectuer une initialisation du sous-module de filtrage si un ensemble de conditions prédéterminées est vérifié.

Par exemple, l'initialisation consiste à :
- affecter une valeur de pression statique réelle à la deuxième pression statique,
- affecter en sortie du module de filtrage la valeur correspondant à une valeur en entrée du module de filtrage.

De façon non limitative, l'ensemble de conditions comprend :
- la vitesse de l'aéronef est inférieure à une vitesse prédéterminée ;
- l'initialisation n'a pas été effectuée pour le vol en cours ou doit être effectuée de nouveau.

Par ailleurs, la troisième étape de calcul comprend les sous-étapes suivantes :
- une troisième sous-étape de calcul, mise en œuvre par un troisième sous-module de calcul, consistant à calculer une pression statique hybridée en calculant la somme de la différence de pression statique et la première pression statique ;
- une quatrième sous-étape de calcul, mise en œuvre par un quatrième sous-module de calcul, consistant à calculer l'altitude de secours à partir de la pression statique hybridée et d'un modèle atmosphérique standard.

L'invention concerne également un dispositif de détermination d'une altitude de secours d'un aéronef,

Selon l'invention, le dispositif de détermination comprend les modules suivants :
- un premier module de calcul configuré pour calculer une première pression statique à partir d'une altitude déterminée par un module de géolocalisation ;
- un module de réception configuré pour recevoir une deuxième pression statique déterminée par un capteur de pression statique ;
- un deuxième module de calcul configuré pour calculer une différence de pression statique entre la deuxième pression statique et la première pression statique ;
- un module de filtrage configuré pour filtrer la différence de pression statique ;
- un troisième module de calcul configuré pour calculer l'altitude de secours à partir de la différence de pression statique filtrée par le module de filtrage et de la première pression statique calculée par le premier module de calcul ;
- un module d'envoi configuré pour fournir l'altitude de secours calculée à un dispositif utilisateur.

Selon une particularité, le premier module de calcul comprend les sous-modules suivants :
- un premier sous-module de réception configuré pour recevoir l'altitude déterminée par le module de géolocalisation ;
- un premier sous-module de calcul configuré pour calculer la première pression statique à partir de l'altitude reçue dans par le sous-module de réception et d'un modèle atmosphérique standard qui définit une pression statique en fonction d'une altitude.

Avantageusement, le module de filtrage comprend les sous-modules suivants :
- un deuxième sous-module de réception configuré pour recevoir une vitesse verticale de l'aéronef déterminée par le module de géolocalisation ;
- un deuxième sous-module de calcul configuré pour calculer une constante de temps variable à partir de la valeur absolue vitesse verticale de l'aéronef et d'un tableau d'interpolation qui définit une constante de temps en fonction d'une vitesse verticale de l'aéronef ;
- un sous-module de filtrage configuré pour filtrer la différence de pression statique selon la constante de temps variable.

En outre, le module de filtrage comprend un sous-module d'initialisation configuré pour effectuer une initialisation du sous-module de filtrage si un ensemble de conditions prédéterminées est vérifié.

Par ailleurs, le troisième module de calcul comprend les sous-modules suivants :
- un troisième sous-module de calcul configuré pour calculer une pression statique hybridée en calculant la somme de la différence de pression statique et la première pression statique ;
- un quatrième sous-module de calcul configuré pour calculer l'altitude de secours à partir de la pression statique hybridée et d'un modèle atmosphérique standard.

L'invention concerne également un aéronef, en particulier un avion de transport, comportant un dispositif de détermination d'une altitude de secours de l'aéronef, tel que décrit ci-dessus.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente schématiquement un mode de réalisation du dispositif de détermination,
- la figure 2 représente un mode de réalisation du dispositif de détermination,
- la figure 3 représente schématiquement les étapes du procédé de détermination selon un mode de réalisation,
- la figure 4 représente un aéronef embarquant un dispositif de détermination.

### DESCRIPTION DÉTAILLÉE

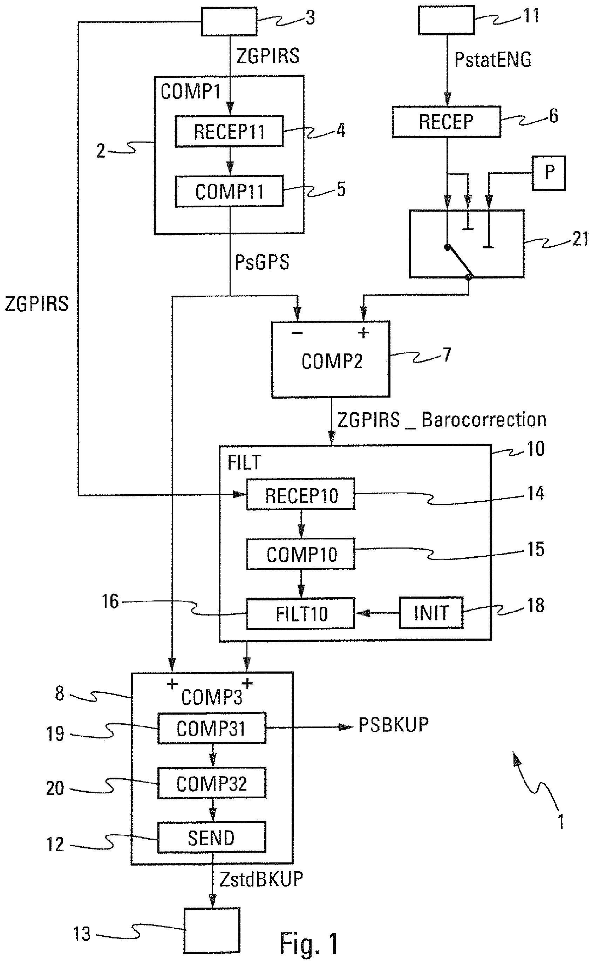

La figure 1 présente un mode de réalisation du dispositif de détermination d'une altitude de secours ZstdBKUP d'un aéronef AC. Dans la suite de la description le « dispositif de détermination d'une altitude de secours ZstdBKUP d'un aéronef AC » est appelé « dispositif de détermination ».

Il peut être compris dans un calculateur embarqué.

Le dispositif de détermination 1 est basé sur le fait que l'altitude pression (« pressure altitude » en anglais) et l'altitude géométrique (« géométrie altitude » en anglais) sont décalées l'une par rapport à l'autre. Tout du moins, elles sont décalées avec une différence qui évolue très lentement. Ce fait est vérifié expérimentalement.

La difficulté vient du fait que ce décalage évolue quand l'aéronef AC quitte son niveau de vol.

Pour résoudre cette difficulté, le dispositif de détermination 1 comprend les modules suivants.

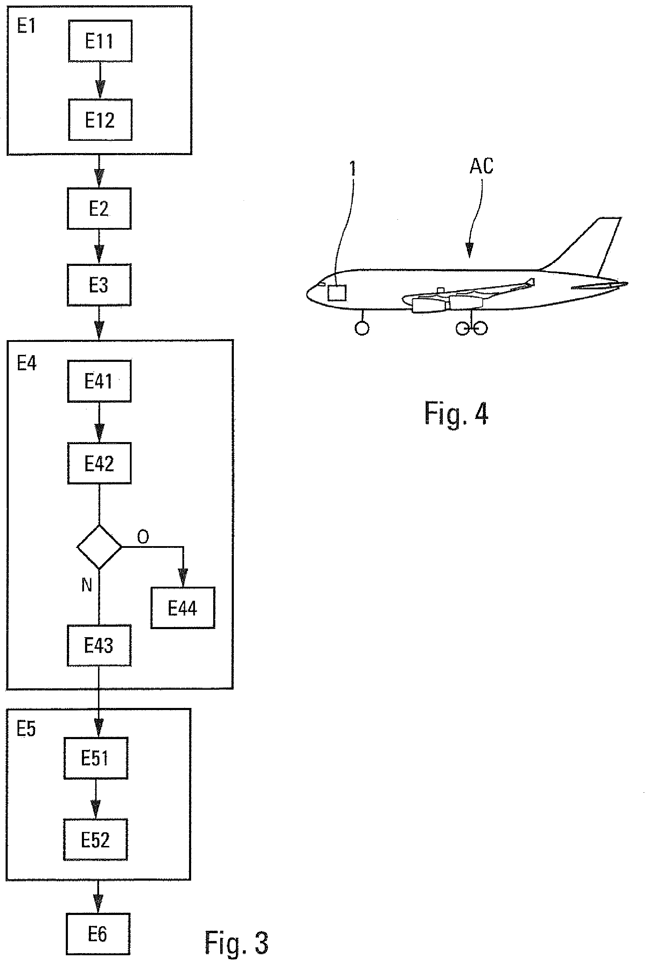

Le dispositif de détermination 1, qui est embarqué sur l'aéronef AC (figure 4), comprend, comme représenté sur la figure 1, un module de calcul COMP1 (COMP pour « computational module » en anglais) 2, un module de calcul COMP2 7, un module de filtrage FILT (FILT pour « filtering module » en anglais) 10, un module de calcul COMP3 8, un module de réception RECEP (RECEP pour « reception module » en anglais) 6, un module de filtrage FILT (FILT pour « filtering module » en anglais) 10, et un module d'envoi SEND (SEND pour « sending module » en anglais) 12.

Le module de calcul 2 est configuré pour calculer une pression statique PsGPS à partir d'une altitude géométrique ZGPIRS déterminée par un module de géolocalisation 3.

Le module de géolocalisation 3 peut correspondre à un système de géo-navigation par satellite (« global navigation satellite system » en anglais). Par exemple, le système de géo-navigation par satellite correspond à un système de géolocalisation par satellites, par exemple de type GPS (GPS pour « Global Positioning System » en anglais).

Avantageusement, le module de calcul 2 comprend les sous-modules suivants :
- un sous-module de réception RECEP11 4 configuré pour recevoir l'altitude géométrique ZGPIRS déterminée par le module de géolocalisation 3;
- un sous-module de calcul COMP11 5 configuré pour calculer la pression statique PsGPS à partir de l'altitude géométrique ZGPIRS reçue par le sous-module de réception 4 et d'un modèle atmosphérique standard qui définit une pression statique en fonction d'une altitude.

Le modèle atmosphérique standard peut correspondre au modèle atmosphérique standard international ou autrement appelé modèle ISA (ISA pour « International Standard Atmosphere » en anglais). Ce modèle décrit les variations de pression, de viscosité, de température, de densité, etc. en fonction de l'altitude. D'autre modèles atmosphériques peuvent être utilisés. Le calcul de la première pression statique peut être réalisé par le sous-module de calcul 5 à l'aide d'une formule définissant une pression statique en fonction de l'altitude basée sur le modèle atmosphérique et/ou à l'aide une table d'interpolation définissant une pression statique en fonction de l'altitude basée sur le modèle atmosphérique.

Le modèle atmosphérique peut être compris dans une mémoire du module de calcul 2.

Le module de réception 6 est configuré pour recevoir une pression statique PstatENG déterminée par un capteur de pression statique 11. Le capteur de pression statique 11 peut correspondre à un capteur d'un moteur de l'aéronef AC.

Selon un mode de réalisation, le dispositif de détermination 1 peut comprendre un sous-module de secours 21 permettant d'affecter une valeur par défaut P à la deuxième pression statique PstatENG, si la pression statique PstatENG déterminée par le capteur de pression statique 11 ne présente pas de valeur cohérente. Cette valeur par défaut P par défaut peut être sensiblement égale à 1013 hPa.

Le module de calcul 7 est configuré pour calculer une différence de pression statique ZGPIRS_Barocorrection entre la pression statique PstatENG et la pression statique PsGPS.

Cette différence de pression statique ZGPIRS_Barocorrection correspond à une correction barométrique permettant de corriger la pression statique PsGPS.

Le module de filtrage 10 est configuré pour filtrer la différence de pression statique ZGPIRS_Barocorrection.

Le module de calcul 8 est configuré pour calculer l'altitude de secours ZstdBKUP à partir de la différence de pression statique ZGPIRS_Barocorrection filtrée par le module de filtrage 10 et de la pression statique PsGPS calculée par le module de calcul 2.

Avantageusement, le module de calcul 8 comprend les sous-modules suivants :
- un sous-module de calcul COMP31 19 configuré pour calculer une pression statique hybridée PSBKUP en calculant la somme de la différence de pression statique ZGPIRS_Barocorrection filtrée par le module de filtrage 10 et la pression statique PsGPS ;
- un sous-module de calcul COMP32 20 configuré pour calculer l'altitude de secours ZstdBKUP à partir de la pression statique hybridée PSBKUP et du modèle atmosphérique standard.

Ce dispositif de détermination 1 permet ainsi d'obtenir une altitude de secours ZstdBKUP qui s'affranchit des sources anémobarométriques ou ADR.

Le module d'envoi 12 est configuré pour fournir un signal représentatif l'altitude de secours ZstdBKUP calculée à un dispositif utilisateur 13.

Le dispositif utilisateur 13 peut correspondre à un système d'affichage configuré pour afficher l'altitude de secours ZstdBKUP à partir du signal représentatif de l'altitude de secours fourni par le module d'envoi.

Avantageusement, le module de filtrage 10 comprend les sous-modules suivants :
- un sous-module de réception RECEP10 14 configuré pour recevoir une vitesse verticale VZGPIRS de l'aéronef AC déterminée par le module de géolocalisation 3 ;
- un sous-module de calcul COMP10 15 configuré pour calculer la constante de temps variable TauHybrid à partir de la valeur absolue |*u*| de la vitesse verticale VZGPIRS de l'aéronef AC et d'un tableau d'interpolation T qui définit une constante de temps en fonction de la valeur absolue d'une vitesse verticale de l'aéronef AC ;
- un sous-module de filtrage FILT10 16 configuré pour filtrer la différence de pression statique ZGPIRS_Barocorrection selon la constante de temps variable TauHybrid.

Le module de filtrage 10 permet d'obtenir une altitude de secours ZstdBKUP exacte en tenant compte du fait que les couches de l'atmosphère ne sont pas exactement identiques à celles de l'atmosphère modélisée par le modèle d'atmosphérique standard corrigé de la correction barométrique (la différence de pression statique ZGPIRS_Barocorrection.

Par exemple, le sous-module de calcul 15 calcule la constante de temps variable TauHybrid à l'aide d'un tableau d'interpolation T qui met en relation la constante de temps avec la valeur absolue |*u*| de la vitesse verticale VZGPIRS de l'aéronef AC. Le sous-module de calcul 15 calcule la valeur absolue |*u*| de la vitesse verticale VZGPIRS de l'aéronef AC afin de calculer la constante de temps TauHybrid à l'aide du tableau d'interpolation T.

Dans un exemple non limitatif, le tableau d'interpolation T comprend des valeurs choisies de la manière suivante.

À un niveau de vol constant, la correction barométrique (la différence de pression statique ZGPIRS_Barocorrection) est filtrée en utilisant une constante de temps TauHybrid très longue. En revanche, dès que le niveau de vol de l'aéronef AC change, en se basant sur la vitesse verticale VZGPIRS de l'aéronef AC, la correction barométrique est synchronisée plus rapidement avec la pression statique PstatENG ; ce qui veut dire que la constante de temps TauHybrid est plus faible.

Ainsi, de façon non limitative, le tableau d'interpolation T comprend les valeurs suivantes.

Quand la vitesse verticale de l'aéronef AC présente une vitesse verticale VZGPIRS de 100 pieds/min (environ 1,83 km/h), la constante de temps TauHybrid prend une valeur égale à 1000 s.

Quand la vitesse verticale de l'aéronef AC présente une vitesse verticale VZGPIRS de 5000 pieds/min (environ 91,44 km/h), la constante de temps TauHybrid prend une valeur égale à 3 s.

Le sous-module de filtrage 16 peut correspondre à un module de filtrage de premier ordre. Il peut comprendre au moins un filtre passe-bas ou un filtre passe-haut ou tout autre filtre adapté au filtrage de la correction barométrique (différence de pression statique ZGPIRS_Barocorrection). Le sous-module de filtrage 16 permet de supprimer le bruit de la correction barométrique. Ce sous-module de filtrage 16 fonctionne à une fréquence de l'inverse (1/Tauhybrid) de la constante de temps variable TauHybrid.

Avantageusement, le module de filtrage 10 comprend en outre un sous-module d'initialisation INIT (INIT pour « initialisation module » en anglais) 18 configuré pour effectuer une initialisation du sous-module de filtrage 16 si un ensemble de conditions prédéterminées est vérifié.

Par exemple, l'initialisation consiste à :
- affecter une valeur de pression statique réelle Pstat à la pression statique PstatENG,
- affecter en sortie du sous-module de filtrage 16 la valeur correspondant à une valeur en entrée du sous-module de filtrage 16.

L'ensemble de conditions peut comprendre :
- la vitesse de l'aéronef AC est inférieure à une vitesse prédéterminée ;
- l'initialisation n'a pas été effectuée pour le vol en cours ou doit être effectuée de nouveau (réinitialisation (« reset » en anglais) du calculateur embarqué).

De façon non limitative, la vitesse prédéterminée est sensiblement égale à 60 nœuds (environ 111,12 km/h).

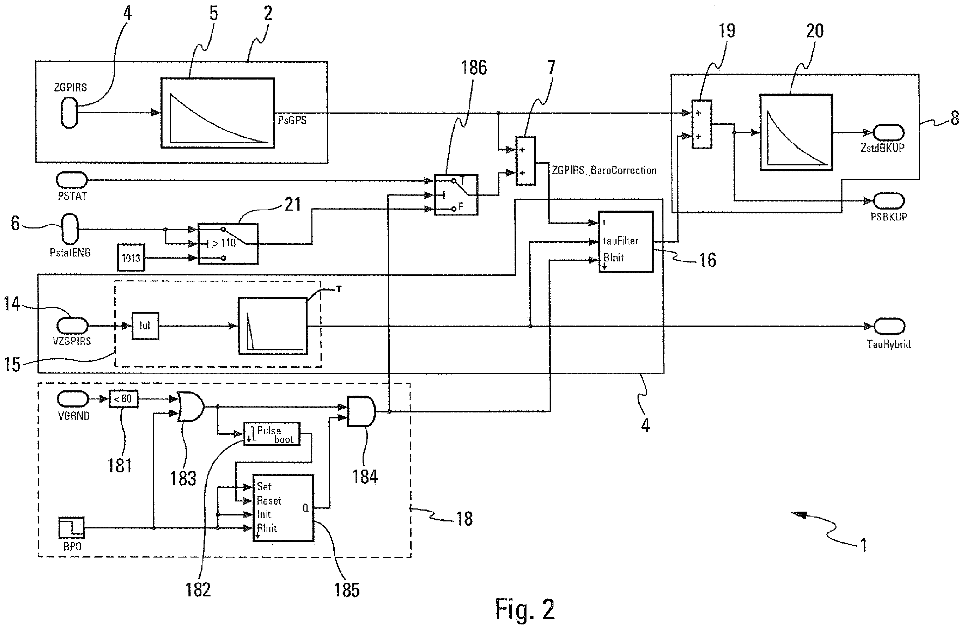

La figure 2 représente un mode de réalisation du dispositif de détermination et, en particulier du module d'initialisation 18.

Dans ce mode de réalisation, le module d'initialisation 18 comprend deux entrées : une première entrée correspondant à un signal représentatif de la vitesse VGRND de l'aéronef AC et une deuxième entrée correspondant à un signal booléen d'initialisation BPO qui passe au signal booléen « vrai » uniquement lors des premiers cycles de fonctionnement du procédé, par exemple, lors de la mise sous tension du calculateur embarqué mettant en œuvre le procédé ou lors d'une réinitialisation du calculateur. Un sous-module 181 émet un signal booléen « vrai » lorsque la vitesse VGRND de l'aéronef AC est inférieure à 60 nœuds et un signal booléen « faux » si cette vitesse VGRND est au-dessus de 60 nœuds. Le signal d'initialisation BPO et le signal du sous-module 181 sont envoyés aux entrées d'une porte OU 183 dont la sortie est connectée à une première entrée d'une porte ET 184 et à l'entrée d'un module Pulse 182. Le module Puise 182 émet un signal booléen « faux » si le signal de sortie de la porte OU est « vrai » et un signal booléen « vrai » si le signal de sortie de la porte OU est « faux ».

Dans ce mode de réalisation, le module d'initialisation comprend une bascule (« flip flop » en anglais) 185 présentant une entrée « set », une entrée « reset », deux entrées d'initialisation et une sortie Q. Le signal d'initialisation BPO est envoyé à l'entrée « set » et aux deux entrées d'initialisation. Le signal émis par le module Pulse 182 est envoyé à l'entrée « reset ». La sortie Q est connectée à la deuxième entrée de la porte ET 184.

La sortie de la porte ET 184 est connectée à un composant 186. La sortie du composant 186 correspond à la pression statique PstatENG déterminée par un capteur de pression statique 11 si la sortie de la porte ET 184 émet un signal booléen « faux » et à la pression statique réelle Pstat si la sortie de la porte ET 184 émet un signal booléen « vrais ». La sortie du composant 186 est connecté au module de calcul 7. Ainsi, le module de calcul 7 est configuré pour calculer une différence de pression statique ZGPIRS_Barocorrection entre la pression statique PstatENG et la pression statique PsGPS, si la sortie de la porte ET 184 émet un signal booléen « faux » ou une différence de pression statique ZGPIRS_Barocorrection entre la pression statique réelle Pstat et la pression statique PsGPS, si la sortie de la porte ET 184 émet un signal booléen « vrai ».

La figure 3 représente un mode de réalisation du procédé de détermination d'une altitude de secours ZstdBKUP d'un aéronef AC.

Le procédé de détermination comprend les étapes suivantes qui sont mises en œuvre de façon répétitive et automatique :
- une étape E1 de calcul, mise en oeuvre par le module de calcul 2, consistant à calculer une pression statique PsGPS à partir d'une altitude déterminée par un module de géolocalisation 3 ;
- une étape E2 de réception, mise en œuvre par le module de réception 6, consistant à recevoir une pression statique PstatENG déterminée par un capteur de pression statique 11 ;
- une étape E3 de calcul, mise en œuvre par le module de calcul 7, consistant à calculer une différence de pression statique ZGPIRS_Barocorrection entre la pression statique PstatENG et la pression statique PsGPS ;
- une étape E4 de filtrage, mise en œuvre par un module de filtrage (10), consistant à filtrer la différence de pression statique ZGPIRS_Barocorrection ;
- une étape E5 de calcul, mise en œuvre par le module de calcul 8, consistant à calculer l'altitude de secours ZstdBKUP à partir de la différence de pression statique ZGPIRS_Barocorrection filtrée dans l'étape E4 de filtrage et de la pression statique PsGPS calculée dans la étape E1 de calcul ;
- une étape E6 d'envoi, mise en œuvre par le module d'envoi 12, consistant à fournir l'altitude de secours ZstdBKUP calculée à un dispositif utilisateur 13.

L'étape E1 de calcul peut comprendre les sous-étapes suivantes :
- une sous-étape E11 de réception, mise en œuvre par le sous-module de réception 4, consistant à recevoir l'attitude déterminée par le module de géolocalisation 3 ;
- une sous-étape E12 de calcul, mise en œuvre par le sous-module de calcul 5, consistant à calculer la pression statique PsGPS à partir de l'altitude reçue dans la sous-étape E11 de réception et d'un modèle atmosphérique standard qui définit une pression statique en fonction d'une altitude.

Avantageusement, l'étape E4 de filtrage comprend les sous-étapes suivantes :
- une sous-étape E41 de réception, mise en œuvre par le sous-module de réception 14, consistant à recevoir une vitesse verticale VZGPIRS de l'aéronef AC déterminée par le module de géolocalisation 3 ;
- une sous-étape E42 de calcul, mise en œuvre par le sous-module de calcul 15, consistant à calculer la constante de temps variable TauHybrid à partir de la valeur absolue |*u*| vitesse verticale VZGPIRS de l'aéronef AC et d'un tableau d'interpolation T qui définit une constante de temps en fonction d'une vitesse verticale de l'aéronef AC ;
- une sous-étape E43 de filtrage, mise en œuvre par le sous-module de filtrage 16, consistant à filtrer la différence de pression statique ZGPIRS_Barocorrection selon la constante de temps variable TauHybrid.

Avantageusement, l'étape E4 de filtrage comprend en outre une sous-étape E44 d'initialisation, mise en œuvre par le sous-module d'initialisation 18, consistant à effectuer une initialisation du sous-module de filtrage 16 si un ensemble de conditions prédéterminées est vérifié.

Sur la figure 3, la branche O correspond au fait que l'ensemble des conditions est vérifié. La branche N correspond au fait que l'ensemble des conditions n'est pas vérifié.

L'étape E5 de calcul comprend les sous-étapes suivantes :
- une sous-étape E51 de calcul, mise en œuvre par le sous-module de calcul 19, consistant à calculer une pression statique hybridée PSBKUP en calculant la somme de la différence de pression statique ZGPIRS_Barocorrection et la pression statique PsGPS ;
- une sous-étape E52 de calcul, mise en œuvre par le sous-module de calcul 20, consistant à calculer l'altitude de secours ZstdBKUP à partir de la pression statique hybridée PSBKUP et du modèle atmosphérique standard.

## Revendications

1. Procédé de détermination d'une altitude de secours (ZstdBKUP) d'un aéronef (AC), comprenant les étapes suivantes qui sont mises en œuvre de façon répétitive et automatique :
- une première étape (E1) de calcul, mise en œuvre par un premier module de calcul (2), consistant à calculer une première pression statique (PsGPS) à partir d'une altitude (ZGPIRS) déterminée par un module de géolocalisation (3) ;
- une étape (E2) de réception, mise en œuvre par un module de réception (6), consistant à recevoir une deuxième pression statique (PstatENG) déterminée par un capteur de pression statique (11) ;
- une deuxième étape (E3) de calcul, mise en œuvre par un deuxième module de calcul (7), consistant à calculer une différence de pression statique (ZGPIRS_Barocorrection) entre la deuxième pression statique (PstatENG) et la première pression statique (PsGPS) ;
- une étape (E4) de filtrage, mise en œuvre par un module de filtrage (10), consistant à filtrer la différence de pression statique (ZGPIRS_Barocorrection) ;
- une troisième étape (E5) de calcul, mise en œuvre par un troisième module de calcul (8), consistant à calculer l'altitude de secours (ZstdBKUP) à partir de la différence de pression statique (ZGPIRS_Barocorrection) filtrée dans l'étape (E4) de filtrage et de la première pression statique (PsGPS) calculée dans la première étape (E1) de calcul ;
- une étape (E6) d'envoi, mise en œuvre par un module d'envoi (12), consistant à fournir l'altitude de secours (ZstdBKUP) calculée à un dispositif utilisateur (13).

2. Procédé selon la revendication 1,
**caractérisé en ce que** la première étape (E1) de calcul comprend les sous-étapes suivantes :
- une première sous-étape (E11) de réception, mise en œuvre par un premier sous-module de réception (4), consistant à recevoir l'altitude (ZGPIRS) déterminée par le module de géolocalisation (3) ;
- une première sous-étape (E12) de calcul, mise en œuvre par un premier sous-module de calcul (5), consistant à calculer la première pression statique (PsGPS) à partir de l'altitude (ZGPIRS) reçue dans la sous-étape (E11) de réception et d'un modèle atmosphérique standard qui définit une pression statique en fonction d'une altitude.

3. Procédé selon l'une quelconque des revendications 1 ou 2, **caractérisé en ce que** l'étape (E4) de filtrage comprend les sous-étapes suivantes :
- une deuxième sous-étape (E41) de réception, mise en œuvre par un deuxième sous-module de réception (14), consistant à recevoir une vitesse verticale (VZGPIRS) de l'aéronef (AC) déterminée par le module de géolocalisation (3) ;
- une deuxième sous-étape (E42) de calcul, mise en œuvre par un deuxième sous-module de calcul (15), consistant à calculer une constante de temps variable (TauHybrid) à partir de la valeur absolue (|*u*|) de la vitesse verticale de l'aéronef (AC) et d'un tableau d'interpolation (T) qui définit une constante de temps en fonction d'une vitesse verticale de l'aéronef (AC) ;
- une sous-étape (E43) de filtrage, mise en œuvre par un sous-module de filtrage (16), consistant à filtrer la différence de pression statique (ZGPIRS_Barocorrection) selon la constante de temps variable (TauHybrid).

4. Procédé selon la revendication 3, **caractérisé en ce que** l'étape (E4) de filtrage comprend en outre une sous-étape (E44) d'initialisation, mise en œuvre par un sous-module d'initialisation (18), consistant à effectuer une initialisation du sous-module de filtrage (16) si un ensemble de conditions prédéterminées est vérifié.

5. Procédé selon la revendication 4,
**caractérisé en ce que** l'initialisation consiste à :
- affecter une valeur de pression statique réelle (Pstat) à la deuxième pression statique (PstatENG),
- affecter en sortie du module de filtrage (10) la valeur correspondant à une valeur en entrée du module de filtrage (10).

6. Procédé selon l'une quelconque des revendications 4 ou 5, **caractérisé en ce que** l'ensemble de conditions comprend :
- la vitesse de l'aéronef (AC) est inférieure à une vitesse prédéterminée ;
- l'initialisation n'a pas été effectuée pour le vol en cours ou doit être effectué de nouveau.

7. Procédé selon l'une quelconque des revendications 1 à 6,
**caractérisé en ce que** la troisième étape (E5) de calcul comprend les sous-étapes suivantes :
- une troisième sous-étape (E51) de calcul, mise en œuvre par un troisième sous-module de calcul (19), consistant à calculer une pression statique hybridée (PSBKUP) en calculant la somme de (i) la différence de pression statique (ZGPIRS_Barocorrection) et (ii) la première pression statique (PsGPS) ;
- une quatrième sous-étape (E52) de calcul, mise en œuvre par un quatrième sous-module de calcul (20), consistant à calculer l'altitude de secours (ZstdBKUP) à partir de la pression statique hybridée (PSBKUP) et d'un modèle atmosphérique standard.

8. Dispositif de détermination d'une altitude de secours d'un aéronef (AC), comprenant les modules suivants :
- un premier module de calcul (2) configuré pour calculer une première pression statique (PsGPS) à partir d'une altitude (ZGPIRS) déterminée par un module de géolocalisation (3) ;
- un module de réception (6) configuré pour recevoir une deuxième pression statique (PstatENG) déterminée par un capteur de pression statique (11) ;
- un deuxième module de calcul (7) configuré pour calculer une différence de pression statique (ZGPIRS_Barocorrection) entre la deuxième pression statique (PstatENG) et la première pression statique (PsGPS) ;
- un module de filtrage (10) configuré pour filtrer la différence de pression statique (ZGPIRS_Barocorrection) ;
- un troisième module de calcul (8) configuré pour calculer l'altitude de secours (ZstdBKUP) à partir de la différence de pression statique (ZGPIRS_Barocorrection) filtrée par le module de filtrage (10) et de la première pression statique (PsGPS) calculée par le premier module de calcul (2);
- un module d'envoi (12) configuré pour fournir l'altitude de secours (ZstdBKUP) calculée à un dispositif utilisateur (13).

9. Dispositif selon la revendication 8,
**caractérisé en ce que** le premier module de calcul (2) comprend les sous-modules suivants :
- un premier sous-module de réception (4) configuré pour recevoir l'altitude (ZGPIRS) déterminée par le module de géolocalisation (3) ;
- un premier sous-module de calcul (5) configuré pour calculer la première pression statique (PsGPS) à partir de l'altitude (ZGPIRS) reçue dans par le sous-module de réception (4) et d'un modèle atmosphérique standard qui définit une pression statique en fonction d'une altitude.

10. Dispositif selon l'une quelconque des revendications 8 ou 9, **caractérisé en ce que** le module de filtrage (10) comprend les sous-modules suivants :
- un deuxième sous-module de réception (14) configuré pour recevoir une vitesse verticale (VZGPIRS) de l'aéronef (AC) déterminée par le module de géolocalisation (3) ;
- un deuxième sous-module de calcul (15) configuré pour calculer une constante de temps variable (TauHybrid) à partir de la valeur absolue (|*u*|) vitesse verticale (VZGPIRS) de l'aéronef (AC) et d'un tableau d'interpolation (T) qui définit une constante de temps en fonction d'une vitesse verticale de l'aéronef (AC) ;
- un sous-module de filtrage (16) configuré pour filtrer la différence de pression statique (ZGPIRS_Barocorrection) selon la constante de temps variable (TauHybrid).

11. Dispositif selon la revendication 10, **caractérisé en ce que** le module de filtrage (10) comprend en outre un sous-module d'initialisation (18) configuré pour effectuer une initialisation du sous-module de filtrage (16) si un ensemble de conditions prédéterminées est vérifié.

12. Dispositif selon l'une quelconque des revendications 8 à 11, **caractérisé en ce que** le troisième module de calcul (8) comprend les sous-modules suivants :
- un troisième sous-module de calcul (19) configuré pour calculer une pression statique hybridée (PSBKUP) en calculant la somme de (i) la différence de pression statique (ZGPIRS_Barocorrection) et (ii) la première pression statique (PsGPS) ;
- un quatrième sous-module de calcul (20) configuré pour calculer l'altitude de secours (ZstdBKUP) à partir de la pression statique hybridée (PSBKUP) et d'un modèle atmosphérique standard.

13. Aéronef,
**caractérisé en ce qu'**il comporte un dispositif de détermination (1) d'une altitude de secours (ZstdBKUP) de l'aéronef (AC), tel que celui spécifié sous l'une quelconque des revendications 8 à 12.

## Patentansprüche

1. Verfahren zur Bestimmung einer Nothöhe (ZstdBKUP) eines Luftfahrzeugs (AC), welches die folgenden Schritte umfasst, welche wiederholt und automatisch durchgeführt werden:
- einen ersten Schritt (E1) der Berechnung, der von einem ersten Berechnungsmodul (2) durchgeführt wird und darin besteht, einen ersten statischen Druck (PsGPS) aus einer von einem Geolokalisierungsmodul (3) bestimmten Höhe (ZGPIRS) zu berechnen;
- einen Schritt (E2) des Empfangs, der von einem Empfangsmodul (6) durchgeführt wird und darin besteht, einen zweiten statischen Druck (PstatENG), der von einem Sensor des statischen Drucks (11) bestimmt wurde, zu empfangen;
- einen zweiten Schritt (E3) der Berechnung, der von einem zweiten Berechnungsmodul (7) durchgeführt wird und darin besteht, eine Differenz des statischen Drucks (ZGPIRS_Barocorrection) zwischen dem zweiten statischen Druck (PstatENG) und dem ersten statischen Druck (PsGPS) zu berechnen;
- einen Schritt (E4) der Filterung, der von einem Filtermodul (10) durchgeführt wird und darin besteht, die Differenz des statischen Drucks (ZGPIRS_Barocorrection) zu filtern;
- einen dritten Schritt (E5) der Berechnung, der von einem dritten Berechnungsmodul (8) durchgeführt wird und darin besteht, die Nothöhe (ZstdBKUP) aus der im Schritt (E4) der Filterung gefilterten Differenz des statischen Drucks (ZGPIRS_Barocorrection) und dem im ersten Schritt (E1) der Berechnung berechneten ersten statischen Druck (PsGPS) zu berechnen;
- einen Schritt (E6) des Sendens, der von einem Sendemodul (12) durchgeführt wird und darin besteht, die berechnete Nothöhe (ZstdBKUP) an eine Benutzervorrichtung (13) zu liefern.

2. Verfahren nach Anspruch 1,
**dadurch gekennzeichnet, dass** der erste Schritt (E1) der Berechnung die folgenden Teilschritte umfasst:
- einen ersten Teilschritt (E11) des Empfangs, der von einem ersten Empfangs-Untermodul (4) durchgeführt wird und darin besteht, die von dem Geolokalisierungsmodul (3) bestimmte Höhe (ZGPIRS) zu empfangen;
- einen ersten Teilschritt (E12) der Berechnung, der von einem ersten Berechnungs-Untermodul (5) durchgeführt wird und darin besteht, den ersten statischen Druck (PsGPS) aus der im Teilschritt (E11) des Empfangs empfangenen Höhe (ZGPIRS) und einem standardmäßigen Atmosphärenmodell, welches einen statische Druck in Abhängigkeit von einer Höhe definiert, zu berechnen.

3. Verfahren nach einem der Ansprüche 1 oder 2,
**dadurch gekennzeichnet, dass** der Schritt (E4) der Filterung die folgenden Teilschritte umfasst:
- einen zweiten Teilschritt (E41) des Empfangs, der von einem zweiten Empfangs-Untermodul (14) durchgeführt wird und darin besteht, eine von dem Geolokalisierungsmodul (3) bestimmte Vertikalgeschwindigkeit (VZGPIRS) des Luftfahrzeugs (AC) zu empfangen;
- einen zweiten Teilschritt (E42) der Berechnung, der von einem zweiten Berechnungs-Untermodul (15) durchgeführt wird und darin besteht, eine variable Zeitkonstante (TauHybrid) aus dem absoluten Betrag (|µ|) der Vertikalgeschwindigkeit des Luftfahrzeugs (AC) und einer Interpolationstabelle (T), welche eine Zeitkonstante in Abhängigkeit von einer Vertikalgeschwindigkeit des Luftfahrzeugs (AC) definiert, zu berechnen;
- einen Teilschritt (E43) der Filterung, der von einem Filter-Untermodul (16) durchgeführt wird und darin besteht, die Differenz des statischen Drucks (ZGPIRS_Barocorrection) gemäß der variablen Zeitkonstante (TauHybrid) zu filtern.

4. Verfahren nach Anspruch 3,
**dadurch gekennzeichnet, dass** der Schritt (E4) der Filterung außerdem einen Teilschritt (E44) der Initialisierung umfasst, der von einem Initialisierungs-Untermodul (18) durchgeführt wird und darin besteht, eine Initialisierung des Filter-Untermoduls (16) auszuführen, falls eine Gesamtheit von vorbestimmten Bedingungen erfüllt ist.

5. Verfahren nach Anspruch 4,
**dadurch gekennzeichnet, dass** die Initialisierung darin besteht:
- dem zweiten statischen Druck (PstatENG) einen Istwert des statischen Drucks (Pstat) zuzuweisen,
- am Ausgang des Filtermoduls (10) den Wert zuzuweisen, der einem Wert am Eingang des Filtermoduls (10) entspricht.

6. Verfahren nach einem der Ansprüche 4 oder 5,
**dadurch gekennzeichnet, dass** die Gesamtheit von Bedingungen umfasst:
- die Geschwindigkeit des Luftfahrzeugs (AC) ist niedriger als eine vorbestimmte Geschwindigkeit;
- die Initialisierung wurde für den aktuellen Flug nicht ausgeführt oder muss erneut ausgeführt werden.

7. Verfahren nach einem der Ansprüche 1 bis 6,
**dadurch gekennzeichnet, dass** der dritte Schritt (E5) der Berechnung die folgenden Teilschritte umfasst:
- einen dritten Teilschritt (E51) der Berechnung, der von einem dritten Berechnungs-Untermodul (19) durchgeführt wird und darin besteht, einen hybridisierten statischen Druck (PSBKUP) durch Berechnen der Summe von (i) der Differenz des statischen Drucks (ZGPIRS_Barocorrection) und (ii) dem ersten statischen Druck (PsGPS) zu berechnen;
- einen vierten Teilschritt (E52) der Berechnung, der von einem vierten Berechnungs-Untermodul (20) durchgeführt wird und darin besteht, die Nothöhe (ZstdBKUP) aus dem hybridisierten statischen Druck (PSBKUP) und einem standardmäßigen Atmosphärenmodell zu berechnen.

8. Vorrichtung zur Bestimmung einer Nothöhe eines Luftfahrzeugs (AC), welche die folgenden Module umfasst:
- ein erstes Berechnungsmodul (2), das dafür ausgelegt ist, einen ersten statischen Druck (PsGPS) aus einer von einem Geolokalisierungsmodul (3) bestimmten Höhe (ZGPIRS) zu berechnen;
- ein Empfangsmodul (6), das dafür ausgelegt ist, einen zweiten statischen Druck (PstatENG), der von einem Sensor des statischen Drucks (11) bestimmt wurde, zu empfangen;
- ein zweites Berechnungsmodul (7), das dafür ausgelegt ist, eine Differenz des statischen Drucks (ZGPIRS_Barocorrection) zwischen dem zweiten statischen Druck (PstatENG) und dem ersten statischen Druck (PsGPS) zu berechnen;
- ein Filtermodul (10), das dafür ausgelegt ist, die Differenz des statischen Drucks (ZGPIRS_Barocorrection) zu filtern;
- ein drittes Berechnungsmodul (8), das dafür ausgelegt ist, die Nothöhe (ZstdBKUP) aus der von dem Filtermodul (10) gefilterten Differenz des statischen Drucks (ZGPIRS_Barocorrection) und dem von dem ersten Berechnungsmodul (2) berechneten ersten statischen Druck (PsGPS) zu berechnen;
- ein Sendemodul (12), das dafür ausgelegt ist, die berechnete Nothöhe (ZstdBKUP) an eine Benutzervorrichtung (13) zu liefern.

9. Vorrichtung nach Anspruch 8, **dadurch gekennzeichnet, dass** das erste Berechnungsmodul (2) die folgenden Untermodule umfasst:
- ein erstes Empfangs-Untermodul (4), das dafür ausgelegt ist, die von dem Geolokalisierungsmodul (3) bestimmte Höhe (ZGPIRS) zu empfangen;
- ein erstes Berechnungs-Untermodul (5), das dafür ausgelegt ist, den ersten statischen Druck (PsGPS) aus der im vom Empfangs-Untermodul (4) empfangenen Höhe (ZGPIRS) und einem standardmäßigen Atmosphärenmodell, welches einen statische Druck in Abhängigkeit von einer Höhe definiert, zu berechnen.

10. Vorrichtung nach einem der Ansprüche 8 oder 9,
**dadurch gekennzeichnet, dass** das Filtermodul (10) die folgenden Untermodule umfasst:
- ein zweites Empfangs-Untermodul (14), das dafür ausgelegt ist, eine von dem Geolokalisierungsmodul (3) bestimmte Vertikalgeschwindigkeit (VZGPIRS) des Luftfahrzeugs (AC) zu empfangen;
- ein zweites Berechnungs-Untermodul (15), das dafür ausgelegt ist, eine variable Zeitkonstante (TauHybrid) aus dem absoluten Betrag (|µ|) der Vertikalgeschwindigkeit (VZGPIRS) des Luftfahrzeugs (AC) und einer Interpolationstabelle (T), welche eine Zeitkonstante in Abhängigkeit von einer Vertikalgeschwindigkeit des Luftfahrzeugs (AC) definiert, zu berechnen;
- ein Filter-Untermodul (16), das dafür ausgelegt ist, die Differenz des statischen Drucks (ZGPIRS_Barocorrection) gemäß der variablen Zeitkonstante (TauHybrid) zu filtern.

11. Vorrichtung nach Anspruch 10,
**dadurch gekennzeichnet, dass** das Filtermodul (10) außerdem ein Initialisierungs-Untermodul (18) umfasst, das dafür ausgelegt ist, eine Initialisierung des Filter-Untermoduls (16) auszuführen, falls eine Gesamtheit von vorbestimmten Bedingungen erfüllt ist.

12. Vorrichtung nach einem der Ansprüche 8 bis 11, **dadurch gekennzeichnet, dass** das dritte Berechnungsmodul (8) die folgenden Untermodule umfasst:
- ein drittes Berechnungs-Untermodul (19), das dafür ausgelegt ist, einen hybridisierten statischen Druck (PSBKUP) durch Berechnen der Summe von (i) der Differenz des statischen Drucks (ZGPIRS_Barocorrection) und (ii) dem ersten statischen Druck (PsGPS) zu berechnen;
- ein viertes Berechnungs-Untermodul (20), das dafür ausgelegt ist, die Nothöhe (ZstdBKUP) aus dem hybridisierten statischen Druck (PSBKUP) und einem standardmäßigen Atmosphärenmodell zu berechnen.

13. Luftfahrzeug,
**dadurch gekennzeichnet, dass** es eine Vorrichtung zur Bestimmung (1) einer Nothöhe (ZstdBKUP) des Luftfahrzeugs (AC), wie sie unter einem der Ansprüche 8 bis 12 spezifiziert wird, umfasst.

## Claims

1. Method for determining a backup altitude (ZstdBKUP) of an aircraft (AC), comprising the following steps, which are implemented repetitively and automatically:
- a first computing step (E1), implemented by a first computational module (2), consisting in computing a first static pressure (PsGPS) from an altitude (ZGPIRS) determined by a geolocation module (3);
- a receiving step (E2), implemented by a reception module (6), consisting in receiving a second static pressure (PstatENG) determined by a static pressure sensor (11);
- a second computing step (E3), implemented by a second computational module (7), consisting in computing a static pressure difference (ZGPIRS_Barocorrection) between the second static pressure (PstatENG) and the first static pressure (PsGPS);
- a filtering step (E4), implemented by a filtering module (10), consisting in filtering the static pressure difference (ZGPIRS_Barocorrection);
- a third computing step (E5), implemented by a third computational module (8), consisting in computing the backup altitude (ZstdBKUP) from the static pressure difference (ZGPIRS_Barocorrection) filtered in the filtering step (E4) and from the first static pressure (PsGPS) computed in the first computing step (E1);
- a sending step (E6), implemented by a sending module (12), consisting in delivering the computed backup altitude (ZstdBKUP) to a user device (13).

2. Method according to Claim 1,
**characterized in that** the first computing step (E1) comprises the following substeps:
- a first receiving substep (E11), implemented by a first reception submodule (4), consisting in receiving the altitude (ZGPIRS) determined by the geolocation module (3);
- a first computing substep (E12), implemented by a first computational submodule (5), consisting in computing the first static pressure (PsGPS) from the altitude (ZGPIRS) received in the receiving substep (E11) and from a standard atmospheric model that defines a static pressure as a function of an altitude.

3. Method according to either one of Claims 1 and 2, **characterized in that** the filtering step (E4) comprises the following substeps:
- a second receiving substep (E41), implemented by a second reception submodule (14), consisting in receiving a vertical speed (VZGPIRS) of the aircraft (AC), said speed being determined by the geolocation module (3);
- a second computing substep (E42), implemented by a second computational submodule (15), consisting in computing a variable time constant (TauHybrid) from the absolute value (|*u*|) of the vertical speed of the aircraft (AC) and from an interpolation table (T) that defines a time constant as a function of a vertical speed of the aircraft (AC);
- a filtering substep (E43), implemented by a filtering submodule (16), consisting in filtering the static pressure difference (ZGPIRS_Barocorrection) depending on the variable time constant (TauHybrid).

4. Method according to Claim 3,
**characterized in that** the filtering step (E4) furthermore comprises an initialization substep (E44), implemented by an initialization submodule (18), consisting in carrying out an initialization of the filtering submodule (16) if a set of predetermined conditions is met.

5. Method according to Claim 4,
**characterized in that** the initialization consists in:
- assigning an actual static pressure value (Pstat) to the second static pressure (PstatENG),
- assigning to the output of the filtering module (10) the value corresponding to a value input into the filtering module (10).

6. Method according to either one of Claims 4 and 5, **characterized in that** the set of conditions comprises:
- the speed of the aircraft (AC) is lower than a predetermined speed;
- the initialization has not been carried out for the flight in progress or must be carried out again.

7. Method according to any one of Claims 1 to 6, **characterized in that** the third computing step (E5) comprises the following substeps:
- a third computing substep (E51), implemented by a third computational submodule (19), consisting in computing a hybridized static pressure (PSBKUP) by computing the sum of (i) the static pressure difference (ZGPIRS_Barocorrection) and (ii) the first static pressure (PsGPS);
- a fourth computing substep (E52), implemented by a fourth computational submodule (20), consisting in computing the backup altitude (ZstdBKUP) from the hybridized static pressure (PSBKUP) and from a standard atmospheric model.

8. Device for determining a backup altitude of an aircraft (AC),
comprising the following modules:
- a first computational module (2) configured to compute a first static pressure (PsGPS) from an altitude (ZGPIRS) determined by a geolocation module (3);
- a reception module (6) configured to receive a second static pressure (PstatENG) determined by a static pressure sensor (11);
- a second computational module (7) configured to compute a static pressure difference (ZGPIRS_Barocorrection) between the second static pressure (PstatENG) and the first static pressure (PsGPS);
- a filtering module (10) configured to filter the static pressure difference (ZGPIRS_Barocorrection);
- a third computational module (8) configured to compute the backup altitude (ZstdBKUP) from the static pressure difference (ZGPIRS_Barocorrection) filtered by the filtering module (10) and from the first static pressure (PsGPS) computed by the first computational module (2);
- a sending module (12) configured to deliver the computed backup altitude (ZstdBKUP) to a user device (13) .

9. Device according to Claim 8,
**characterized in that** the first computational module (2) comprises the following submodules:
- a first reception submodule (4) configured to receive the altitude (ZGPIRS) determined by the geolocation module (3);
- a first computational submodule (5) configured to compute the first static pressure (PsGPS) from the altitude (ZGPIRS) received by the reception submodule (4) and from a standard atmospheric model that defines a static pressure as a function of an altitude.

10. Device according to either one of Claims 8 and 9, **characterized in that** the filtering module (10) comprises the following submodules:
- a second reception submodule (14) configured to receive a vertical speed (VZGPIRS) of the aircraft (AC), said speed being determined by the geolocation module (3) ;
- a second computational submodule (15) configured to compute a variable time constant (TauHybrid) from the absolute value (|*u*|) of the vertical speed (VZGPIRS) of the aircraft (AC) and from an interpolation table (T) that defines a time constant as a function of a vertical speed of the aircraft (AC);
- a filtering submodule (16) configured to filter the static pressure difference (ZGPIRS_Barocorrection) depending on the variable time constant (TauHybrid).

11. Device according to Claim 10,
**characterized in that** the filtering module (10) furthermore comprises an initialization submodule (18) configured to carry out an initialization of the filtering submodule (16) if a set of predetermined conditions is met.

12. Device according to any one of Claims 8 to 11, **characterized in that** the third computational module (8) comprises the following submodules:
- a third computational submodule (19) configured to compute a hybridized static pressure (PSBKUP) by computing the sum of (i) the static pressure difference (ZGPIRS_Barocorrection) and (ii) the first static pressure (PsGPS);
- a fourth computational submodule (20) configured to compute the backup altitude (ZstdBKUP) from the hybridized static pressure (PSBKUP) and from a standard atmospheric model.

13. Aircraft,
**characterized in that** it includes a device (1) for determining a backup altitude (ZstdBKUP) of the aircraft (AC), such as that specified in any one of Claims 8 to 12.
